# EUROPÄISCHE PATENTSCHRIFT

(11) **EP 2 918 879 B1**
(45) Veröffentlichungstag und Bekanntmachung des Hinweises auf die Patenterteilung: **27.04.2016**
(21) Anmeldenummer: 15000607.0
(22) Anmeldetag: 03.03.2015
(51) Int. Cl.: F16K 11/02, F16K 11/076, F16K 11/085, F16K 11/20

(54) **Mehrfachventil**
Multivalve
Vanne multi-voies

(30) Priorität: 15.03.2014 DE 102014003802
(43) Veröffentlichungstag der Anmeldung: 16.09.2015
(73) Patentinhaber: Diehl Aerospace GmbH, 88662 Überlingen (DE)
(72) Erfinder: Poggel, Steffen, DE - 70499 Stuttgart (DE); Schmidt, Sven, DE - 70569 Stuttgart (DE)
(74) Vertreter: Diehl Patentabteilung

(56) Entgegenhaltungen:
- WO-A1-2013/157194
- GB-A- 2 056 630
- US-A- 4 263 937
- US-A1- 2011 272 049
- US-A1- 2012 012 215

## Beschreibung

Die Erfindung betrifft ein Mehrfachventil, welches insbesondere zur Versorgung eines Reformer-Brennstoffzellen-Systems mit Gas geeignet ist.

Die EP 2 413 409 A1 offenbart eine zentrale Medienversorgungseinheit für ein Reformer-Brennstoffzellen-System. Dabei ist in einem Gehäuseblock ein rohrartiger Durchgang mit einer Einlassöffnung und mehreren Auslassöffnungen vorgesehen. Ein Durchfluss durch eine Auslassöffnung kann mittels eines der Auslassöffnung zugeordneten Proportionalventils wahlweise gesteuert werden.

Die bekannte Medienversorgungseinheit, insbesondere der Gehäuseblock, erfordert einen hohen Herstellungsaufwand. Sie ist überdies nicht besonders kompakt ausgestaltet.

Aus der GB 2 056 630 A ist ein Drehventil für eine Druckfluidverteilung bekannt, das eine sequentielle Lieferung der Druckflüssigkeit zu einer Reihe von Auslässen bewirkt. Ein Gehäuse enthält einen Stator, der eine semi-zylindrische Seitenoberfläche aufweist, durch welche sich Austrittsöffnungen öffnen, und einen länglichen zylindrischen Rotor, der zur Rotation benachbart der Statorfläche gelagert ist. Der Rotor weist eine Reihe von strömungslenkenden Durchgängen auf. Diese sind angeordnet, um Druckfluid, das in das Innere des Gehäuses zugeführt ist, durch jede der Austrittsöffnungen, zumindest eine zu einer Zeit und in einer vorbestimmten Abfolge, während der Drehung des Rotors zu lenken. Die Fluidströmungsdurchgänge sind entlang des Rotors axial beabstandet und die Durchgänge sind überlappend entlang des Umfang des Rotors beabstandet, welche Beabstandung so gewählt ist, um die zerstörerische Wirkung von Wasserschlag zu minimieren oder zu vermeiden durch Ausbildung einer Strömung durch einen Teil einer hinteren Austrittsöffnung, bevor eine vorhergehende Austrittsöffnung die Fluidströmung wirksam verschließt.

Aus der US 2011/0272049 A1 ist ein Kühlmittel-Rücklaufverteiler für ein Fahrzeug-Kühlsystem mit einer Vielzahl von Anschlüssen bekannt. Die Anschlüsse sind durch den Benutzer rekonfigurierbar, um zu öffnen, so dass Kühlmittel in den Verteiler fließt, oder zu schließen, so dass Kühlmittel nicht in den Verteiler fließt. Die Anschlüsse werden durch Drehen eines Ventilschiebers in Bezug auf den Verteilerkörper geöffnet und geschlossen. Die Anschlüsse des Verteilers werden auf Öffnungen des Ventilschiebers ausgerichtet, um einen Anschluss zu öffnen, so dass Kühlmittel in den Verteiler fließt. Eine Vielzahl von Positionen des Ventilschiebers in Bezug auf den Verteilerkörper erlauben einem Benutzer die Auswahl einer Position, in der die gewünschte Kombination von Anschlüssen offen und geschlossen ist.

Aus der US 2012/0012215 A1 ist eine Vorrichtung zum Auswählen einer Strömungsrate eines Fluids bekannt. Die Vorrichtung beinhaltet einen Zylinder mit einem Ausgangsanschluss und einer Vielzahl von Eingangsanschlüssen, und eine Achse, die im wesentlichen konzentrisch innerhalb des Zylinders angeordnet ist. Eine Mehrzahl von Ablaufkanälen sind in einer äußeren Oberfläche der Achse gebildet, wobei jeder Ablaufkanal eine Tiefe kleiner einer Dicke einer Wand der Achse aufweist. Die Achse ist drehbar innerhalb des Zylinders, um einen aus einer Vielzahl von Strömungswegen zwischen einem der Vielzahl von Eingangsanschlüssen und dem Ausgangsanschluss zu schaffen. Jeder Strömungsweg wird zumindest teilweise durch wenigstens einen der Ablaufkanäle definiert.

Aufgabe der Erfindung ist es, die Nachteile nach dem Stand der Technik zu beseitigen. Es soll insbesondere ein möglichst einfach und kostengünstig herstellbares Mehrfachventil angegeben werden, welches kompakt aufgebaut ist.

Diese Aufgabe wird durch die Merkmale des Anspruchs 1 gelöst. Zweckmäßige Ausgestaltungen der Erfindung ergeben sich aus den Merkmalen der Ansprüche 2 bis 14.

Nach Maßgabe der Erfindung wird ein Mehrfachventil mit einem einen rohrartigen Durchgang aufweisenden Verteilergehäuse mit einer Einlassöffnung und mehreren Auslassöffnungen vorgeschlagen, wobei jeder Auslassöffnung ein im rohrartigen Durchgang entlang einer Längsachse des Durchgangs axial drehbar aufgenommener Ventilschließkörper zugeordnet ist, wobei der Ventilschließkörper einen axialen Durchbruch und einen radial vom Durchbruch abzweigenden Auslasskanal aufweist, so dass durch Drehen des Ventilschließkörpers der Auslasskanal wahlweise in Übereinstimmung mit der dazu korrespondierenden Auslassöffnung stellbar ist, und eine Antriebseinrichtung zum Drehen des Ventilschließkörpers. Gemäß der Erfindung sind die Ventilschließkörper mittels der jeweiligen Antriebseinrichtungen unabhängig voneinander bewegbar.

Das vorgeschlagene Mehrfachventil besteht aus wenigen Teilen, ist einfach aufgebaut und kompakt gestaltet. Das Verteilergehäuse kann zumindest mit einem den Ventilschließkörper aufnehmenden Abschnitt aus einem Rohr hergestellt werden. Indem eine Länge des Rohrs und die Anzahl der darin aufgenommenen Ventilschließkörper variiert werden, kann das Mehrfachventil einfach an jeweilige Anwendungserfordernisse angepasst werden.

Bei einer vorteilhaften Ausgestaltung der Erfindung weist das Verteilergehäuse mindestens eine erste Auslassöffnung mit einem ersten Durchmesser und mindestens eine zweite Auslassöffnung mit einem zweiten Durchmesser auf. Der erste Durchmesser ist kleiner als der zweite Durchmesser. Nach einer vorteilhaften Ausgestaltung der Erfindung ist der Ventilschließkörper nach Art eines Rohrabschnitts ausgebildet. In diesem Fall erübrigt sich die Herstellung des axialen Durchbruchs. Es muss lediglich noch durch eine Bohrung in der Rohrwandung der Auslasskanal hergestellt werden. Das vereinfacht weiter die Herstellung des Mehrfachventils. Der Ventilschließkörper ist zweckmäßigerweise mittels einer ersten Dichtung bezüglich des Durchgangs abgedichtet. Bei der ersten Dichtung kann es sich um zwei Ringdichtungen handeln, welche am Außenumfang des Ventilschließkörpers vorgesehen sind.

Mehrere benachbart zueinander angeordnete Ventilschließkörper sind vorteilhafterweise baugleich ausgeführt. Die Durchbrüche benachbarter Ventilschließkörper bilden vorteilhafterweise einen mit der Einlassöffnung in Verbindung stehenden Verteilerkanal. Benachbarte Ventilschließkörper sind zweckmäßigerweise unter Zwischenschaltung eines Axiallagers gegeneinander abgestützt. Damit kann eine besonders kompakte Bauweise des Mehrfachventils erreicht werden.

Nach einer weiteren Ausgestaltung ist eine dem Verteilergehäuse zugewandte weitere Auslassöffnung des Auslasskanals von einer Ringdichtung umgeben. Die Ringdichtung kann am Verteilergehäuse oder am Ventilschließkörper angebracht sein.

Bei einer besonders kompakten Ausgestaltung sind benachbarte Auslassöffnungen bezüglich einer Umfangsrichtung des Durchgangs versetzt zueinander angeordnet. Das erleichtert die Anbringung eines Auslassstutzens am Ausgang der Auslassöffnung. Zu diesem Zweck kann die Auslassöffnung beispielsweise mit einem Innengewinde versehen sein, so dass ein Auslassstutzen die Herstellung einer Schraubverbindung mit dem Verteilergehäuse verbunden werden kann.

Zum Verstellen kann der Ventilschließkörper eine davon sich erstreckende Stellstange aufweisen, welche ein dazu korrespondierendes und sich im Verteilergehäuse in der Umfangsrichtung erstreckendes Langloch durchgreift. Zwischen dem Durchgang und dem Ventilschließkörper kann eine das Langloch umgebende zweite Dichtung vorgesehen sein.

Die Antriebseinrichtung kann einen mit der Stellstange antriebsmäßig verbundenen Servomotor umfassen. Nach einer Alternative kann die Stellstange auch weggelassen werden. In diesem Fall ist die Antriebseinrichtung vorteilhafterweise eine elektromagnetisch arbeitende Stelleinrichtung, mit welcher der abschnittsweise magnetisch ausgeführte Ventilschließkörper berührungsfrei drehbar ist. Der Ventilschließkörper bildet zusammen mit der Antriebseinrichtung vorteilhafterweise ein Proportionalventil.

Stromabwärts der Auslassöffnung kann ein Masseflusssensor vorgesehen sein. Die Antriebseinrichtung und der Masseflusssensor können mit einer Steuerung oder einer Regelung verbunden sein. Damit ist es möglich, mit jedem der Ventile des Mehrfachventils einen Massefluss eines dadurch hindurchgeführten Fluids exakt zu steuern oder zu regeln.

Nach einer weiteren Ausgestaltung ist stromaufwärts der Einlassöffnung ein Gebläse, vorzugsweise ein Turbogebläse, zum Zuführen von Luft in das Verteilergehäuse vorgesehen. In diesem Fall eignet sich eine aus dem Mehrfachventil und dem Gebläse gebildete Luftzuführeinheit insbesondere zur Versorgung von Reformer-Brennstoffzellen-System mit Luft.

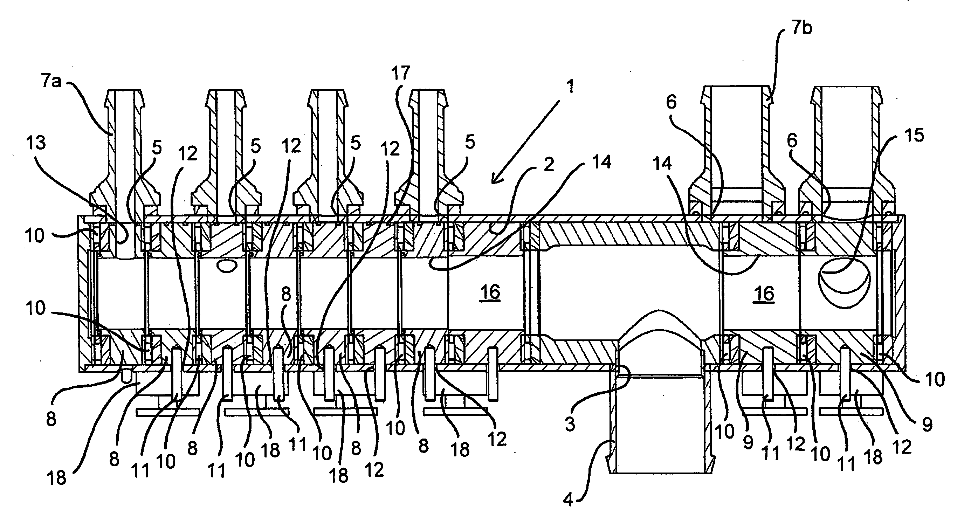

Nachfolgend wird ein Ausführungsbeispiel der Erfindung anhand der Zeichnung näher erläutert.

In der einzigen Figur ist mit dem Bezugszeichen 1 ein Verteilergehäuse bezeichnet, welches einen rohrartigen Durchgang 2 aufweist. Das Verteilergehäuse 1 kann - wie in der Figur dargestellt ist - beispielsweise aus einem Rohr hergestellt sein. Das Verteilergehäuse 1 weist eine Einlassöffnung 3 auf, welcher ein Einlassstutzen 4 vorgeordnet sein kann.

Das Verteilergehäuse 1 weist mehrere erste Auslassöffnungen 5 und mehrere zweite Auslassöffnungen 6 auf, denen jeweils erste Auslassstutzen 7a und zweite Auslassstutzen 7b nachgeordnet sind. Ein erster Durchmesser der ersten Auslassöffnungen 5 ist kleiner als ein zweiter Durchmesser der zweiten Auslassöffnungen 6.

Den ersten Auslassöffnungen 5 sind erste Ventilschließkörper 8 zugeordnet. Den zweiten Auslassöffnungen 6 sind zweite Ventilschließkörper 9 zugeordnet. Die Ventilschließkörper 8, 9 sind jeweils nach Art eines Rohrabschnitts ausgebildet, welcher axial drehbar im rohrartigen Durchgang 2 aufgenommen ist. Zwischen benachbarten Ventilschließkörpern 8, 9 ist vorteilhafterweise jeweils ein Axiallager 10 vorgesehen. Von jedem Ventilschließkörper 8, 9 erstreckt sich eine Stellstange 11, welche jeweils ein dazu korrespondierendes Langloch 12 im Verteilergehäuse 1 durchgreift.

Die ersten Ventilschließkörper 8 weisen erste Auslasskanäle 13 auf, welche sich radial von einem Durchbruch 14 in jedem der ersten Ventilschließkörper 8 erstrecken. In ähnlicher Weise weisen die zweiten Ventilschließkörper 9 zweite Auslasskanäle 15 auf, welche sich vom durch die zweiten Ventilkörper 9 erstreckenden Durchbruch 14 radial erstrecken. Ein weiterer erster Durchmesser der ersten Auslasskanäle 13 ist kleiner als ein weiterer zweiter Durchmesser der zweiten Auslasskanäle 15. Ein dritter Durchmesser des Durchbruchs 14 ist zweckmäßigerweise bei sämtlichen Ventilschließkörpern 8, 9 gleich. Die aneinanderliegenden Durchbrüche 14 bilden einen Verteilerkanal 16, welcher mit der Einlassöffnung 3 in Verbindung steht.

Mit dem Bezugszeichen 17 sind Dichtungen bezeichnet, mit denen die Ventilschließkörper 8, 9 gegenüber dem Durchgang 2 abgedichtet werden. Das Bezugszeichen 18 bezeichnet eine schematisch dargestellte Antriebseinrichtung zum Verstellen der Stellstangen 11.

Die Funktion des Mehrfachventils ist Folgende:
Durch die Einlassöffnung 3 wird beispielsweise mittels eines Turbogebläses komprimierte Luft in den rohrartigen Durchgang 2 des Verteilergehäuses 1 gedrückt. Die Luft wird durch den Verteilerkanal 16 verteilt, welcher durch die aneinanderliegenden Durchbrüche 14 der Ventilschließkörper 8, 9 gebildet ist. Durch Verdrehen der Ventilschließkörper 8, 9 mittels der Stellstange 11 und der Antriebseinrichtung 18 kann wahlweise der erste 13 und/oder der zweite Auslasskanal 15 in Übereinstimmung mit der ersten 5 und/oder der zweiten Auslassöffnung 6 gestellt werden, so dass damit ein Luftaustritt aus der jeweiligen Auslassöffnung 5, 6 gesteuert oder geregelt werden kann.

Die Ventilschließkörper 8, 9 sind mittels der jeweiligen Antriebseinrichtungen 18 unabhängig voneinander bewegbar. Zum Erzeugen geeigneter Stellbewegungen können den Auslassöffnungen 5, 6 Masseflusssensoren (hier nicht gezeigt) nachgeordnet sein. Durch die von den Masseflusssensoren gelieferten Signale kann mittels einer Steuerung oder einer Regelung der jeweilige Ventilschließkörper 8, 9 in geeigneter Weise eingestellt werden, so dass aus der jeweiligen Austrittsöffnung 5, 6 ein vorgegebener Massefluss an Luft entlassen wird.

Obwohl es in der Figur nicht gezeigt ist, kann es auch sein, dass das Verteilergehäuse 1 mehrteilig aufgebaut ist. Insbesondere kann ein Abschnitt des Verteilergehäuses 1, welcher lediglich die Einlassöffnung 3 aufweist, als separates Bauteil ausgeführt sein. In diesem Fall können die in der einzigen Figur gezeigten Rohrabschnitte, welche sich links und rechts der Einlassöffnung 3 erstrecken, ebenfalls als separate Bauteile ausgeführt sein. Ein solchermaßen ausgestalteter modularer Aufbau des Mehrfachventils vereinfacht weiter dessen Herstellung. Das Mehrfachventil kann einfach an vorgegebene Anforderungen angepasst werden.

Anstelle des in der Figur gezeigten Antriebs mittels Stellstange 11 und Antriebseinrichtung 18 kann auch ein berührungsloser Antrieb zum Verstellen der Ventilschließkörper 8, 9 vorgesehen sein.

### Bezugszeichenliste

- 1: Verteilergehäuse
- 2: Durchgang
- 3: Einlassöffnung
- 4: Einlassstutzen
- 5: erste Auslassöffnung
- 6: zweite Auslassöffnung
- 7a: erster Auslassstutzen
- 7b: zweiter Auslassstutzen
- 8: erster Ventilschließkörper
- 9: zweiter Ventilschließkörper
- 10: Axiallager
- 11: Stellstange
- 12: Langloch
- 13: erster Auslasskanal
- 14: Durchbruch
- 15: zweiter Auslasskanal
- 16: Verteilerkanal
- 17: Dichtung
- 18: Antriebseinrichtung

## Patentansprüche

1. Mehrfachventil mit einem einen rohrartigen Durchgang (2) aufweisenden Verteilergehäuse (1) mit einer Einlassöffnung (3) und mehreren Auslassöffnungen (5, 6), wobei jeder Auslassöffnung (5, 6) ein im rohrartigen Durchgang (2) axial drehbar aufgenommener Ventilschließkörper (8, 9) zugeordnet ist, wobei der Ventilschließkörper (8, 9) einen axialen Durchbruch (14) und einen radial vom Durchbruch (14) abzweigenden Auslasskanal (13, 15) aufweist, so dass durch Drehen des Ventilschließkörpers (8, 9) der Auslasskänal (13, 15) wahlweise in Übereinstimmung mit der dazu korrespondierenden Auslassöffnung (5, 6) stellbar ist, und einer Antriebseinrichtung (18) zum Drehen des Ventilschließkörpers (8, 9),
**dadurch gekennzeichnet, dass**
die Ventilschließkörper (8, 9) mittels der jeweiligen Antriebseinrichtung (18) unabhängig voneinander bewegbar sind.

2. Mehrfachventil nach Anspruch 1, wobei der Ventilschließkörper (8, 9) nach Art eines Rohrabschnitts ausgebildet ist.

3. Mehrfachventil nach einem der vorhergehenden Ansprüche, wobei der Ventilschließkörper (8, 9) mittels zumindest einer ersten Dichtung (17) bezüglich des Durchbruchs (14) abgedichtet ist.

4. Mehrfachventil nach einem der vorhergehenden Ansprüche, wobei die Durchbrüche (14) benachbarter Ventilschließkörper (8, 9).einen mit der Einlassöffnung (3) in Verbindung stehenden Verteilerkanal (16) bilden.

5. Mehrfachventil nach einem der vorhergehenden Ansprüche, wobei benachbarte Ventilschließkörper (8, 9) unter Zwischenschaltung eines Axiallagers (10) gegeneinander abgestützt sind.

6. Mehrfachventil nach einem der vorhergehenden Ansprüche, wobei eine dem Verteilergehäuse (1) zugewandte weitere Auslassöffnung des Auslasskanals (13, 15) von einer Ringdichtung umgeben ist.

7. Mehrfachventil nach einem der vorhergehenden Ansprüche, wobei benachbarte Auslassöffnungen (8, 9) bezüglich einer Umfangsrichtung des Durchgangs (2) versetzt zueinander angeordnet sind.

8. Mehrfachventil nach einem der vorhergehenden Ansprüche, wobei der Ventilschließkörper (8, 9) eine davon sich ersteckende Stellstange (11) aufweist, welche ein dazu korrespondierendes und sich im Verteilergehäuse (1) in der Umfangsrichtung erstreckendes Langloch (12) durchgreift.

9. Mehrfachventil nach einem der vorhergehenden Ansprüche, wobei zwischen dem Durchgang (2) und dem Ventilschließkörper (8, 9) eine das Langloch (12) umgebende zweite Dichtung vorgesehen ist.

10. Mehrfachventil nach einem der vorhergehenden Ansprüche, wobei die Antriebseinrichtung (18) einen mit der Stellstange (11) antriebsmäßig verbundenen Servomotor umfasst.

11. Mehrfachventil nach einem der vorhergehenden Ansprüche, wobei die Antriebseinrichtung (18) eine elektromagnetisch arbeitende Stelleinrichtung ist, mit welcher der abschnittsweise magnetisch ausgeführte Ventilschließkörper (8, 9) berührungsfrei drehbar ist.

12. Mehrfachventil nach einem der vorhergehenden Ansprüche, wobei stromabwärts der Auslassöffnung (5, 6) ein Masseflusssensor vorgesehen ist.

13. Mehrfachventil nach einem der vorhergehenden Ansprüche, wobei die Antriebseinrichtung (18) und der Masseflusssensor mit einer Steuerung oder einer Regelung verbunden sind.

14. Mehrfachventil nach einem der vorhergehenden Ansprüche, wobei stromaufwärts des Einlassöffnung (3) ein Gebläse, vorzugsweise ein Turbogebläse, zum Zuführen von Luft in das Verteilergehäuse (1) vorgesehen ist.

## Claims

1. Multiway valve with a distributor housing (1) having a tubular passage (2), with an inlet opening (3) and multiple outlet openings (5, 6), wherein each outlet opening (5, 6) is assigned a valve obturator (8, 9) accommodated in an axially rotatable manner in the tubular passage (2), wherein the valve obturator (8, 9) has an axial aperture (14) and an outlet duct (13, 15) which branches off radially from the aperture (14) such that by rotating the valve obturator (8, 9) the outlet duct (13, 15) can as desired be set to match up with the corresponding outlet opening (5, 6), and a drive device (18) for rotating the valve obturator (8, 9),
**characterized in that**
the valve obturators (8,9) can be moved independently of one another by means of the respective drive device (18).

2. Multiway valve according to Claim 1, wherein the valve obturator (8, 9) is designed as a tube section.

3. Multiway valve according to either of the preceding claims, wherein the valve obturator (8, 9) is sealed with respect to the aperture (14) by means of at least one first seal (17).

4. Multiway valve according to one of the preceding claims, wherein the apertures (14) of adjacent valve obturators (8, 9) form a distributor duct (16) which is connected to the inlet opening (3).

5. Multiway valve according to one of the preceding claims, wherein adjacent valve obturators (8, 9) bear against each other, with an axial bearing (10) interposed between them.

6. Multiway valve according to one of the preceding claims, wherein a further outlet opening, oriented towards the distributor housing (1), of the outlet duct (13, 15) is surrounded by an annular seal.

7. Multiway valve according to one of the preceding claims, wherein adjacent outlet openings (8, 9) are arranged offset with respect to one another with reference to a circumferential direction of the passage (2).

8. Multiway valve according to one of the preceding claims, wherein the valve obturator (8, 9) has, extending therefrom, a control rod (11) which passes through a corresponding slot (12) extending in the circumferential direction in the distributor housing (1)

9. Multiway valve according to one of the preceding claims, wherein a second seal, surrounding the slot (12), is provided between the passage (2) and the valve obturator (8, 9).

10. Multiway valve according to one of the preceding claims, wherein the drive device (18) comprises a servomotor drive-connected to the control rod (11).

11. Multiway valve according to one of the preceding claims, wherein the drive device (18) is an electromagnetic actuator by means of which the valve obturator (8, 9), which has magnetic portions, can be rotated in contactless fashion.

12. Multiway valve according to one of the preceding claims, wherein a mass flow sensor is provided downstream of the outlet opening (5, 6).

13. Multiway valve according to one of the preceding claims, wherein the drive device (18) and the mass flow sensor are connected to an open- or closed-loop control.

14. Multiway valve according to one of the preceding claims, wherein a blower, preferably a turbo blower, is provided upstream of the inlet opening (3) for supplying air to the distributor housing (1).

## Revendications

1. Soupape multivoies comprenant un boîtier distributeur (1) présentant un passage de type tubulaire (2) avec une ouverture d'entrée (3) et plusieurs ouvertures de sortie (5, 6), à chaque ouverture de sortie (5, 6) étant associé un corps de fermeture de soupape (8, 9) reçu de manière rotative axialement dans un passage de type tubulaire (2), le corps de fermeture de soupape (8, 9) présentant un orifice axial (14) et un canal de sortie (13, 15) partant radialement depuis l'orifice (14) de telle sorte que par rotation du corps de fermeture de soupape (8, 9), le canal de sortie (13, 15) puisse être placé de manière sélective en coïncidence avec l'ouverture de sortie correspondante (5, 6), et avec un dispositif d'entraînement (18) pour faire tourner le corps de fermeture de soupape (8, 9),
**caractérisée en ce que**
les corps de fermeture de soupape (8, 9) peuvent être déplacés indépendamment l'un de l'autre au moyen du dispositif d'entraînement respectif (18).

2. Soupape multivoies selon la revendication 1, dans laquelle le corps de fermeture de soupape (8, 9) est réalisé à la manière d'une section tubulaire.

3. Soupape multivoies selon l'une quelconque des revendications précédentes, dans laquelle le corps de fermeture de soupape (8, 9) est étanchéifié par rapport à l'orifice (14) au moyen d'au moins un premier joint d'étanchéité (17).

4. Soupape multivoies selon l'une quelconque des revendications précédentes, dans laquelle les orifices (14) de corps de fermeture de soupape adjacents (8, 9) forment un canal de distribution (16) en liaison avec l'ouverture d'entrée (3).

5. Soupape multivoies selon l'une quelconque des revendications précédentes, dans laquelle des corps de fermeture de soupape adjacents (8, 9) sont supportés les uns contre les autres en interposant un palier axial (10).

6. Soupape multivoies selon l'une quelconque des revendications précédentes, dans laquelle une ouverture supplémentaire du canal de sortie (13, 15) tournée vers le boîtier distributeur (1) est entourée par un joint d'étanchéité annulaire.

7. Soupape multivoies selon l'une quelconque des revendications précédentes, dans laquelle des ouvertures de sortie adjacentes (8, 9) sont disposées de manière décalée les unes par rapport aux autres par rapport à une direction périphérique du passage (2).

8. Soupape multivoies selon l'une quelconque des revendications précédentes, dans laquelle le corps de fermeture de soupape (8, 9) présente une tige de réglage (11) s'étendant depuis celui-ci, laquelle vient en prise à travers un trou oblong (12) lui correspondant et s'étendant dans la direction périphérique dans le boîtier distributeur (1).

9. Soupape multivoies selon l'une, quelconque des revendications précédentes, dans laquelle un deuxième joint d'étanchéité entourant le trou oblong (12) est prévu entre le passage (2) et le corps de fermeture de soupape (8, 9).

10. Soupape multivoies selon l'une quelconque des revendications précédentes, dans laquelle le dispositif d'entraînement (18) comprend un servomoteur connecté à la tige de réglage (11) par entraînement.

11. Soupape multivoies selon l'une quelconque des revendications précédentes, dans laquelle le dispositif d'entraînement (18) est un dispositif de réglage fonctionnant par voie électromagnétique avec lequel le corps de fermeture de soupape (8, 9) réalisé en partie magnétiquement peut tourner sans contact.

12. Soupape multivoies selon l'une quelconque des revendications précédentes, dans laquelle un capteur de flux massique est prévu en aval de l'ouverture de sortie (5, 6).

13. Soupape multivoies selon l'une quelconque des revendications précédentes, dans laquelle le dispositif d'entraînement (18) et le capteur de flux massique sont connectés à une commande ou une régulation.

14. Soupape multivoies selon l'une quelconque des revendications précédentes, dans laquelle une soufflante, de préférence une turbosoufflante, est prévue en amont de l'ouverture d'entrée (3) pour acheminer de l'air dans le boîtier distributeur (1).
